# EUROPEAN PATENT SPECIFICATION

(11) **EP 4 630 338 B1**
(45) Date of publication and mention of the grant of the patent: **30.09.2026**
(21) Application number: 23821637.8
(22) Date of filing: 11.12.2023
(51) Int. Cl.: B65F 1/16

(54) **SYSTEM AND METHOD FOR HANDLING WASTE CONTAINERS**
SYSTEM UND VERFAHREN ZUR HANDHABUNG VON ABFALLBEHÄLTERN
SYSTÈME ET PROCÉDÉ DE MANIPULATION DE CONTENANTS DE DÉCHETS

(30) Priority: 09.12.2022 LU 503163
(43) Date of publication of application: 15.10.2025
(73) Proprietor: LUXEMBOURG INSTITUTE OF SCIENCE AND TECHNOLOGY (LIST), 4362 Esch-sur-Alzette (LU)
(72) Inventor: FAYE, Sébastien, 4362 Esch-sur-Alzette (LU); KHADRAOUI, Djamel, 4362 Esch-sur-Alzette (LU)
(74) Representative: Ipsilon Luxembourg
(86) International application number: PCT/EP2023/085130
(87) International publication number: WO 2024/121432

(56) References cited:
- US-A1- 2015 307 273
- AL-JABI MUHANNAD ET AL: "IoT-enabled citizen attractive waste management system", 2017 2ND INTERNATIONAL CONFERENCE ON THE APPLICATIONS OF INFORMATION TECHNOLOGY IN DEVELOPING RENEWABLE ENERGY PROCESSES & SYSTEMS (IT-DREPS), IEEE, 6 December 2017 (2017-12-06), pages 1 - 5, XP033310638, ISBN: 978-1-5386-1984-1, [retrieved on 20180131], DOI: 10.1109/IT-DREPS.2017.8277804
- FERRER JAVIER ET AL: "BIN-CT: Urban waste collection based on predicting the container fill level", BIOSYSTEMS, NORTH-HOLLAND, AMSTERDAM, NL, vol. 186, 17 April 2019 (2019-04-17), XP085935555, ISSN: 0303-2647, [retrieved on 20190417], DOI: 10.1016/J.BIOSYSTEMS.2019.04.006

## Description

### Field of the invention

The invention relates to a method and a system for handling waste containers, i.e., collecting waste from containers.

### Background Art

The document EP 3 138 790 A1 discloses a network of urban waste containers, where the waste containers are equipped with a level sensor and are configured to communicate with a server. Based on the actual amount of waste contained in the containers, the server may set the collection of waste in motion. This method is reactive and not pro-active. The waste containers may remain full for a long period waiting for being emptied by collecting trucks. This method is also not robust to high variations, such as the situations when a high amount of waste is suddenly put in the containers (domestic party, removal, etc.). Also, this system is not failure proof: should a sensor fail, this network will not trigger the collection of waste until a human intervenes. A sensor may fail if its battery is empty or if it is damaged, which may often happen since waste containers can be a hostile environment.

Another known method for collecting waste is used in manufacturing plants, where the collection of waste can be planned based on the scheduled production: the amount of waste can be pre-determined based on the planned operations of the factory. The workers or machines of the factory are requested to perform a series of ordered operations which ineluctably lead to predefined waste. Here, the collection of waste is organized based on pre-determined static data having a high degree of certainty. Such a method is however only possible for situations where the amount of waste can be pre-determined, and is not adapted for events involving a high degree of uncertainty or randomness.

There is therefore a need for a system that enables to dynamically organize the waste collection in unpredictable situations.

### Summary of the invention

The invention aims at proposing a system and a method for collecting waste containers in due time in situations where the amount of waste cannot be planned in advance, and in a manner that is robust against container-level sensors failures.

The invention relates to a system comprising: a plurality of waste containers disposed at venue locations, each waste container being attributed a type of waste and each waste container having a capacity; a plurality of sensors located at the venue locations, each sensor being configured to detect the presence of individuals at the respective venue location and to collect parameters associated with the individuals, the parameters including at least an amount of waste of a given type expected to be produced by the individual; and data processing means programmed to: compute, based on data received from the sensors, an expected filling level for each waste container and/or for each waste container type and/or a time when a respective waste container will be filled to capacity; and transmit the computed filling levels and/or times to a collecting entity.

This system enables a dynamic, reliable, robust, failure-proof and efficient organisation of waste collection.

### Definitions

In the following description, the wording *"waste container"* is to be understood broadly rather than as a single physical box-like container. A waste container can here define any physical container or group of containers, that is dedicated to receiving a particular type of waste. It can be a rigid or soft box-like container, a bag, a bucket, a skip, a wagon, etc., or it can be a delimited area on the ground dedicated to receive refuse. The intended type of waste allocated to the container is identifiable by a user, either by information (e.g., logo) present on the container, or by the shape or colour of the container, or by any other mean (bar code, label, specific location, etc.). A waste container has a given capacity, i.e., an inalterable physical property of the container which can be expressed with an appropriate physical quantity, such as a weight, a volume, a number of standardized items, etc. The amount of waste contained in a container at any given time can be represented by a ratio of the actual content over the capacity of the container: a half-filled container is filled at 50% of its capacity.

Each container is foreseen for a given *type* of waste. The types can distinguish waste based on their nature (glass, plastics, organic, paper, wood varieties, metal, compost, textile, residual etc.), and/or based on their physical properties (liquid, solid, flexible, inert, odorant, toxic, etc.), and/or based on their ability to be recycled (fully, partially, or not), and/or based on their destination (for instance a given intended collecting company). One or more of the containers may receive all refuse without restriction, "all waste" being hence also a possible type of waste.

A *venue* or *venue location* is to be understood as a finite physical space which can host one or more individuals. Examples of a venues are: a shop, a stadium, a conference hall, a restaurant, a hotel, a night club, a cinema, a parking lot, a neighbourhood, a city, a state, a (public) building, a museum, an amusement park, a forest, a national park, a vehicle (bus, airplane, passenger ship, etc), a (de)construction site, a civic amenity site or a household waste recycling centre, or any combination thereof. The venue can be a continuous space or can be an aggregation of discontinuous locations.

One or more *sensor(s)* are arranged at the venue to detect the presence of individuals. The sensors can use one or more technologies, including wireless detection of computing devices (RFID, WIFI, SigFox, etc.), image or video recognition, sound recognition. Individuals may be recognized as such (for instance by face or gait recognition), or may be identified through their computing device (wearable, Internet of Things, smartphone, smartwatch, etc.). As will be detailed below, the wearable device can be provided to the individuals at the entrance to the venue (for instance, bracelets, necklace, badge, etc.). The wearable can alternatively be the smartphone of the individuals. The smartphone may be equipped with a dedicated application, where the individual can choose to share some personal information leading directly or indirectly the system to estimate an individual profile (type of individual, rates of production of waste). Alternatively, scanning a QR code at the venue can lead the individuals to accept to share some private data relevant to the evaluation of waste to be produced. The smartphone can alternatively have an integrated function (hence not part of an application) to allow users to share their waste production and associated data. The sensors and the wearable can operate as nodes, communicating with one another. Part of the processing discussed herein can be made locally by a node before consolidating data. In an embodiment, the wearables or computing devices can serve themselves as sensors directly communicating with the data processing means.

An *individual* can be a single person or can be a group of persons. An individual may be allocated one or several parameters in relation to his/her production of waste. For example, for each type of waste, a given individual can be associated with a waste production rate of that type of waste (e.g., a number of grams of that type of waste produced by unit of time, or per visit in the venue). A given individual can be identified by the system as a tuple which can be summarized as: Individual = <Ind_ID, Ind_type, Activities, R1, R2, ..., RN, T1, T2>, where "Ind_ID" is a unique identification number of the individual, "Ind_type" is a type of individual (adult/child, staff of the venue / client, group/single, vegan/diet/big eater, etc.), "Activities" is the estimated activities (schedule of actions that produce waste), "R1" is the rate of production of waste of the first type (for instance organic waste), "T1" is the time when the individual is detected as entering the venue (earliest detection of his/her presence), and "T2" is an optional estimated time when the individual will leave the venue (and hence ceases to produce waste). One or more of the elements of the tuple may be optional (or may be void if the system cannot estimate them). For instance, in some embodiments, the "Activities" or the time T2 are not taken under consideration. All the elements of the tuple can be read and/or modified by data processing means. For instance, as will be detailed below, the rates of production of waste can be updated by the system based on actual waste produced by the individual. Also, the role of an individual can vary with time: in a fair, an exhibitor can become a visitor and his rate of production of waste will change during the day based on his/her role. These variations can be input by the individuals themselves, through an appropriate interface (e.g., application), or can be detected by the data processing means detecting location change, and/or other variations in the behaviour of the individual through-out time.

The detection of the *presence* of individuals can involve detecting the first appearance of an individual in the venue (e.g., in the field of view or field of detection of the sensors). The departure of the individuals can also be detected. The presence may also be continuously detected: for example, an individual who is detected every two seconds during a two minutes interval may be detected as being present once during 2 minutes (rather than 60 times at each detection occurrence). The presence can be quantified as long, short, average, and the data processing means can modify the rates of production of waste based on the quantification of the presence: for instance, a short presence may substantially diminish the odds for the individual to produce waste, even if that particular individual has a high rate of production of waste. The detection can be implemented as "nodes" captured in a data log, a node containing the identifications of the sensor and of the individual (or its computing device), a time and a location (log0 = <Sensor_ID, Ind_ID, location, time of detection>). The location can be relative or absolute, and can be expressed in 2D or 3D. The power of the signal between the sensor and the computing device can be used in the determination of the location.

The *data processing means* that are used to compute an upcoming amount of waste can be a local processor, or a distributed system, e.g., edge computing. The sensors themselves can participate in the distributed computing system by performing part of the computations. Redundancies can be foreseen to ensure the robustness of the system. Also, the system may involve graceful degradation procedures, i.e., the sensors may have a varying policy to function differently based on their remaining life expectancy (for example, sleeping mode or non-communicating for longer periods, when the life-expectancy is below a given threshold).

For a given type of waste (e.g., type 1), the amount of waste (W1) that is expected to be produced in the future time δ is the integral over time since the waste container of type 1 was empty (δ0), of the sum of waste to be produced by each individual (variable i), where the rates R1(i) for a given individual i may vary with time (due to the update made by the data processing means) and where the individuals to be considered also vary with time.$W 1 \left(δ\right) = {\int }_{δ 0}^{δ} \left({\sum }_{individuals i present at time t} R 1 \left(i, t\right)\right) dt$

Based on the estimated duration that each individual remains in the venue, the amount of waste can be proactively calculated. This means that for each type of waste (e.g., type 1), the time (Tmax1) when the waste container will be filled (and should be collected) can be pre-computed and can be dynamically readjusted at each moment in time. Tmax1 is the time when the amount of waste of type 1 (W1) equals the maximum capacity (C1) of the containers of type 1:
$W 1 \left(Tmax1\right) = C 1$

As noted above, since the computation of W1(δ) is made at a given time (t), and since it depends on individuals effectively present in the venue, and on parameters (incl. R1) which vary over time, the value of Tmax1 may evolve while the events unfold: Tmax1 calculated at a given time t1 may be different from Tmax1 calculated later, at a time t2. The computation of W1(δ) is made continuously or at a high enough frequency, and based on the actual change in the dynamics of the venue, Tmax1 calculated at the beginning of an event may be different than Tmax1 calculated later on. The amount of uncertainty is higher at the beginning than later on.

For each type of waste, this estimated time Tmax when the container reaches its capacity can be communicated to an entity (server, computing means, collectors) that is requested to collect waste in due time, i.e., not too early (as this would diminish the efficiency of the collection and render useless part of the capacity of the waste containers) and not too late (as the time when the container is full must be reduced as low as possible).

Although the above formulas consider the rate of production of waste R1 as a single value (which can be updated by the data processing means), the parameters of an individual can be more complex than a rate of production of amount of waste per unit of time. For example, the production of waste can follow a pre-determined profile or a profile that is dynamically evolving based on the activities (schedule) of the individual: for instance, when eating in a restaurant, the waste produced by a client is (potentially) produced sequentially after each course, but is not produced continuously during the meal. Hence, the parameters R1, ... RN can be replaced with appropriate laws, based on the activities. Data Analytics or Machine Learning methods can be used to collect data and establish an estimation of waste produced by an individual based at least on their activities (and optionally on the venue, the event, or further data). From an initial constant function (equal to an average rate of production of waste), the profile of each individual may evolve into more complex laws (for instance a combination of mathematical functions, crenel functions, etc.,).

Although the above formulas are given for a given type of waste, the same principle can be applied for each waste container. Since the sensors can detect the presence of individuals (by effectively detecting a proximity between the individual and a given sensor), the network of sensors can locate the individual in space and based on the location of the waste containers, can estimate in which container each individual will put their waste. This can be dynamically recalculated over time based on the tracked location of the individuals. In such a case, the data processing means can inform the collecting entity of the calculated time when a given waste container is to be collected (i.e., not only the type of waste to be collected, but the precise container of a given type). As an illustration, in an amusement park, the waste containers that are located nearby a restaurant, where many consumers are located, are more likely to be filled by the consumers around noon than waste containers at other locations of the park.

The distinction of the actual amount of waste within each waste containers is also relevant in a building where two containers of the same type are positioned next to each other. It may be chosen to only collect the container that is filled-in, so as to ensure the continuous availability of a container during the collection of the filled container.

The two computations can be combined: the collecting entity can be informed of a given type of waste and/or one or more specific waste containers to be collected.

### Advantageous embodiments

According to an advantageous embodiment, the sensors comprise wireless detectors configured to detect the presence of individuals at the venue locations and their associated parameters by detecting mobile computing devices held or worn by the individuals. The computing devices may be a wearable of the internet of things, or may be a smartphone with or without a dedicated application thereon. The computing device may be of any size or shape, it may be provided at the entrance of the venue or may belong to the individuals. Any technology that is appropriate depending on the venue can be used: RFID, WIFI, SigFox, Arduino, Raspberry Pi, etc. These technologies enable a reliable detection of the individuals.

According to an advantageous embodiment, the data processing means or the wireless detectors are configured to generate a discovery record upon detection of a mobile computing device, the discovery record comprising a unique identifier of said mobile computing device, a timing information and an amount of waste of any given type of waste associated to the mobile computing device.

According to an advantageous embodiment, the wireless detectors are configured to request authorisation from the mobile computing device to access private data stored thereon. The individuals may set themselves their profile among several possible profiles of waste producers. The system may then use this profile as an initial profile for that particular individual when estimating the waste that will be produced. The data processing means can update this profile based on actual/measured waste produced by that individual. A reward/incentive protocol can be implemented to encourage the individual to improve their profile (towards a greener profile).

According to an advantageous embodiment, the wireless detectors are configured to collect data from mobile computing devices located in their vicinity and which run an application dedicated to share waste production private data. The dedicated application can be provided by the organizer of an event at the entrance of the venue, or before that. The application can also include additional functions, such as emergency alerts, instructions to follow in case of an emergency (which may include dynamic instructions based on actual location or parameters of the individuals), payment functions, tracking functions, etc.

According to an advantageous embodiment, the data processing means are programmed to collect publicly available data from the Internet and to take publicly available data under consideration during the computation of an expected filling level for each waste container and/or of a time when a respective waste container will be filled to capacity. The publicly available data can contain general statistics of production of waste per person, or specific statistics in relation to the venue or to the context of a given event in the venue. The publicly available data can contain specific information regarding an individual (profile of consumer and hence waste producer), specific information regarding the venue (menu of a restaurant, capacity of a stadium or an airplane, etc.). These public data can help initiate the computation of the estimated waste to be produced. A correction can also be applied to the individuals' parameters based on these data: for example, if a restaurant has scheduled a special day for serving mussels or oysters, the amount of waste per client may be higher than usual, even for low-waste-producing people. If a passenger ship company has announced that the cruise will be plastic-less (e.g., removing plastic straws or plastic packaging), even if individuals have a rate of production of plastic waste, this rate will be lowered as there will be no possibility to produce plastic waste. Public data also contains seasonality aspects: if the weather forecast is good on a Saturday in the winter of a countryside region, people are likely to prune their trees and the production of green waste will be higher than usual at the local household waste recycling centre.

According to an advantageous embodiment, the data processing means are programmed to combine the detections of the presence of several individuals to identify a situation amongst a pre-determined list of possible situations, and the data processing means are programmed to take the situation under consideration when computing an expected filling level for each waste container and/or a time when a respective waste container will be filled to capacity. To further improve the robustness and reliability of the prevision, the data processing means can pre-compute a series of scenario. Based on the detected individuals (a tuple <Type of individual, number of individuals>), the data processing means can recognize a pre-computed scenario (or can recognize that the actual situation approximates a precomputed scenario). For every venue or every event, there exists at least a portion of foreseeable things since not everything happens completely randomly: the number of attendees, the scheduled activities, may be used, although not with the highest degree of certainty, to calculate scenarios, such as a low-attendance, a medium-attendance or a high-attendance scenario. Also, a situation can be at least in part defined by the activity(ies) that will be done by the attendees and the associated amount of waste that will be produced.

According to an advantageous embodiment, the sensors comprise audio sensors, camera or video sensors, facial and/or textual recognition sensors, and the presence of individuals and/or their associated parameters is established based on audio, image, video, facial and/or textual data. In an alternative, or in complement, to the detection of computing devices, the individuals may be detected and recognized (or a unique ID can be allocated to each individual) based on audio, image, video, facial and/or textual data. An estimation of the waste to be produced can be made either by recognizing the individuals (by comparison to a database of known individuals) or by recognizing physiological parameters. Alternatively or in combination, a correlation can be established between computing devices and audio, image, video, facial and/or textual data, to associate a detected computing device to a face or a voice for example.

According to an advantageous embodiment, the collecting entity comprises a plurality of collecting vehicles in communication with the data processing means, wherein the data processing means are programmed to indicate to the vehicles or to their drivers a location where waste has to be collected and/or to indicate an itinerary for operating the collection of waste, with the aim to ensure that waste is collected before any waste container surpasses its capacity. Other collecting entities (e.g., operators) can be foreseen.

According to an advantageous embodiment, the system comprises the collecting entity, and the collecting entity comprises a plurality of autonomous collecting vehicles whose movements are controlled by the data processing means with the aim to ensure that waste is collected before any waste container surpasses its capacity. The data processing means can dynamically (re)calculate the optimal route of the collecting vehicles.

According to an advantageous embodiment, auxiliary sensors are provided in or near the waste containers, in the collecting vehicles and/or at a dumpsite where the collecting vehicles unload the waste, wherein the auxiliary sensors measure an amount of waste of any given type and communicate data to the data processing means, and wherein upon a difference occurring between the computation of the data processing means and the amount detected by the auxiliary sensors, the data processing means are programmed to update the amount of waste of a given type expected to be produced by the respective individuals who were detected by the sensors before the step of computing. To distinguish these sensors from the sensors detecting the presence of individuals, these sensors are herein called "auxiliary sensors".

The auxiliary sensors may thus lead the data processing means to update the parameters R1(t), R2(t)..., of the individuals based on actual waste produced.

These auxiliary sensors measure the actual amount of waste in the waste containers. These sensors may be known per se (mechanical, lidar, camera-based, etc.). These sensors may be used to correct/update the estimated time when the collecting entity should collect waste. The estimation of waste of type 1 in a future moment δ can thus be expressed as:
$W 1 \left(δ\right) = W 1 \left(δ1\right) + {\int }_{δ 1}^{δ} \left({\sum }_{individuals i present at time t} R 1 \left(t\right)\right) dt$

Beyond the sensors that detect the presence and identify the individual, and the auxiliary sensors which measure the actual amount of waste, the system may comprise sensors positioned in the vicinity of the waste containers and configured for identifying the individual at the moment when waste is put in a waste container. In combination with the other sensors of the system, this enables to further update the parameters of the individuals and the overall waste content of the entire system.

The closed loop or feedback of the auxiliary sensors reinforces the reliability of the system. Based on the actual waste produced, the data processing means can correct the rates of production of the individuals, can detect patterns, can create or correct the above-mentioned scenario computations. For instance, a restaurant receiving regular clients can consolidate the profile of the clients to reinforce the validity of the estimations made.

According to an advantageous embodiment, the data processing means determine if an auxiliary sensor fails to provide a coherent signal and the data processing means informs the collecting entity that such a failing auxiliary sensor is to be replaced. Hence, the combination of the sensors detecting the presence of individuals and the data from the auxiliary sensors can be combined to detect weaknesses in the system, to replace, and/or (re)calibrate the auxiliary sensors. A signal is not coherent for instance when it diverges away, beyond a given threshold, from the estimated values without apparent reason (no surprising change in the activities of the individual occurred).

According to an advantageous embodiment, the data processing means are configured to output information suggesting the addition of a waste container, together with its type of waste and its location, based on the computed expected filling level for each waste container and/or the computed time when a respective waste container will be filled to capacity. The dynamic aptitudes of the system enable not only to foresee the optimal collecting times, but it may also anticipate the insufficiency of the waste containers: if the number of individuals or the cumulative rates of production of waste of the individuals that are present surpasses a threshold, the system may prompt a user to provide more waste containers. This is made in advance of the actual observation that all the waste containers are filled. Alternatively, or in complement, the system may detect an expected waste production (of a given type of waste) that is below a given threshold and the system may suggest to remove superfluous waste containers. The system thus offers a continuous guide to appropriately (and in advance) regulate the location of the containers, to pre-emptively avoid any issue with container surpassing their capacity and/or appropriately relocate unused containers.

The invention also relates to a method of operating the system of one of the above-mentioned embodiments. The method may comprise one or more of the following steps: informing the data processing means of the number of waste containers, the type of waste that they are targeted to contain, and their respective maximum capacity, and optionally their location; feeding the data processing means with scenarios and/or with profiles of expected individuals and/or with publicly available data in relation to the venue or to the expected individuals; detecting the presence of individuals and their associated parameters; continuously or sequentially computing a waste amount for each type of waste; continuously or sequentially informing the collecting entities of the expected respective time when the waste containers will reach their full capacity; correcting or updating these expected respective times; correcting or updating the individuals parameters based on the actual measured amount of waste produced; training the data processing means with feedback obtained from measured amount of waste.

The invention also relates to a method for training data processing means of the above-mentioned system, wherein the amount of waste expected to be produced by individuals is initially based on publicly available data; the method comprising: computing, based on data received from the sensors, an expected filling level for each waste container; gathering the amount of contained/collected waste measured by the auxiliary sensors; and update the individuals' parameters upon a difference occurring between the computed filling level and the contained/collected amount. The publicly available data can here be used as a "Ground Truth" for the AI-based processing means.

### Technical benefits

As mentioned above, the system of the invention enables a dynamic adaptation of the system to unfolding events. The collection of waste is no longer reactive (based on measured content) or statically planned (fixed planning in advance), but is both predictive and continuously corrective. In the context of waste collecting, improving the collecting time by even a few minutes may greatly improve a situation which may very quickly become chaotic if a venue is crowded. Collecting the waste at the right moment improves the efficiency of the collecting entity, as the ratio of handling cost per amount collected is better than when collecting half-full containers. From the perspective of the collecting entity, waste has value. Beyond that, intangible consequences may also be improved such as hygiene issues, odors, or client satisfaction.

The system of the invention renders the existing sensors measuring the amount of waste superfluous, or, when these auxiliary sensors are still used, they enable to further train the data processing means, or they enable the data processing means to identify failing sensors.

The system may be implemented at low cost: only the sensors must be positioned in the venue, since the computation can be made remotely. Many venues have already a network of WIFI antennas and/or cameras which can be used as sensors detecting the presence of individuals.

Contrary to sensors positioned in the waste containers which can be damaged due to their hostile environment, or even stolen, the system of the invention is resilient against vandalism and is long lasting.

The system of the invention can also assist in real-time the staff of a venue to provide waste containers in a sufficient number (for each type of waste) and at appropriate locations, and/or to detect and remove superfluous containers.

Finally, the system has a positive impact on the environment since it may be used for encouraging green behaviour by providing a ranking or a reward-based incentive to the users who produce less waste.

### Brief description of the figures

Various aspects of the invention will also become apparent in view of the following figures, wherein:
[Fig.1] is a schematic illustration of a system according to the invention;
Figures 2-4 illustrate the estimation of waste produced of a given type.

### Detailed description of an embodiment

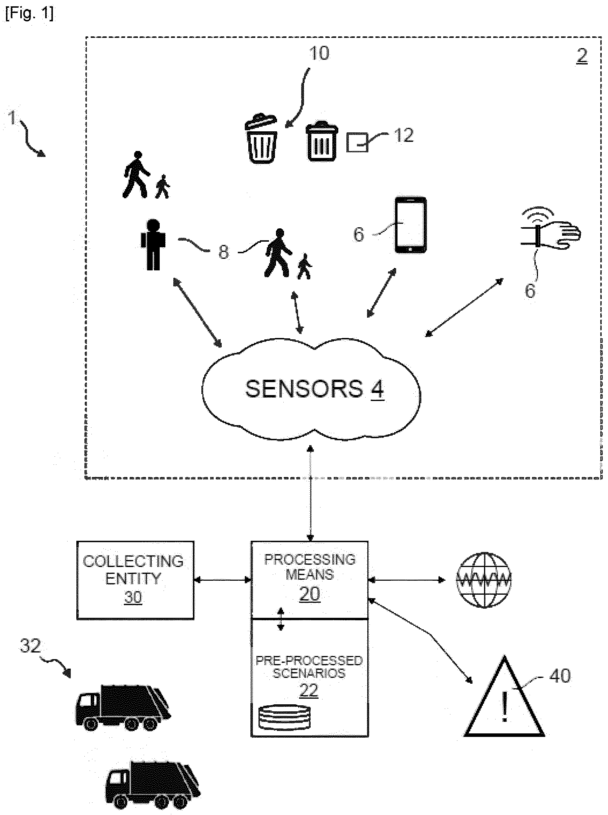

[Fig.1] shows an example of a system 1 according to the invention. For definitions and examples of the various elements of the system, we refer to the above-given information. The system 1 comprises a venue location 2 equipped with sensors 4. Although the figure focuses on a venue location 2, the system may expand over several venue locations 2. The sensors 4 detect the presence of computing devices 6 and/or directly detects the presence of individuals 8 (one person or several people). Individuals 8 are characterized by parameters, such as their expected waste production, the duration of presence in the venue, their expected activities during that time and the type of individual that they are.

The sensors 4 also communicate with the computing devices 6 to gather information relating to the individuals (including their parameters of production of waste).

The sensors 4 may (alternatively or in combination) contain cameras communicating with appropriate image recognition means. The sensors may thus directly identify individuals, and may decide to allocate them an expected waste production. For instance, in the context of a restaurant, based physiological parameters (size, age), the individual may be initially expected to be the source of more waste than average. This initial assumption may be updated/corrected as explained above.

Waste containers 10 are arranged on the venue. Optional auxiliary sensors 12 can monitor the amount of waste in each container 10.

The sensors 4 communicate with processing means 20. The processing means 20 can be located at the venue location 2, or can be remote. The processing means 20 can cooperate with one or more venue locations 2 and their respective sensors 4. The more data is collected by the processing means 20 the more reliable and robust the estimation of waste is. The processing means 20 can draw information from the Internet. The processing means estimate the time when a given waste container and/or a given type of waste, needs to be collected and informs a collecting entity 30. The collecting entity may directly or indirectly control routes of garbage trucks 32 or other means of collection of waste. In an embodiment, the trucks 32 may be autonomously controlled vehicles who respect an itinerary such that waste is collected at the calculated optimal times.

Known heuristic methods can be used to set the itinerary of the trucks. The reliability of all the known methods relies on the input data, one of which being the expected time for collecting the waste. The present invention clearly impacts the efficiency and reliability of the collection of waste in that respect.

The processing means 20 can base their estimation on pre-processed scenarios 22, and can estimate in real-time whether the actual situation resembles a pre-processed scenario. The processing means 20 interact with appropriate memories to store the scenarios and to record the parameters, the presence of individuals (as a log containing the identification of the nodes, the parameters of the individual and the time stamps).

The processing means 20 can interact with the individuals 8 in various ways. For instance, the individuals 8 may be requested to confirm their approval to share private data regarding their waste production. Individuals 8 may also be prompted to confirm that they have thrown waste away. This may enrich the prediction and may be used for survey or experimental/research purposes.

The processing means 20 can also classify the individuals based on their profile, and update their profile of waste producer. An incentive (reduction of tax, reward, etc.) can be foreseen to encourage the individuals to progress towards a greener profile. For instance, the system can evaluate the amount of waste or the way an individual properly sort their waste, and the processing means can use this information to reward, or to suggest behavioural changes to the individuals. An example of such an embodiment could be the detection of a behaviour of a cook in a restaurant and a comparison to the waste generated by comparable cooks in comparable circumstances.

The processing means 20 can provide information 40 to users (e.g., staff of the venue) if a sensor 4, 12 is failing, or to suggest to add or remove containers for a given type of waste and/or at a given location in the venue.

An example of venue location is a restaurant. For instance, 30 smartphones or wearable and/or individuals are detected, including 27 clients, 2 waitresses and 1 cook. The individuals are classified as staff or client, adults or child. The system can estimate based on public data (menu and public statistics) that this combination of people, on that day would lead to the production of 5 kgs of organic waste. Based on the time when the containers were lastly collected, the system can thus calculate when the next collection should happen. Optionally, the system measures the actual amount of waste after 1 hour, and/or at the moment of the collection. This result feeds the data processing means to further improve the model, and to adjust the parameters of these individuals. The next time the daily menu and the staff crew is identical, the estimation will take the actual waste produced in early similar circumstances into account.

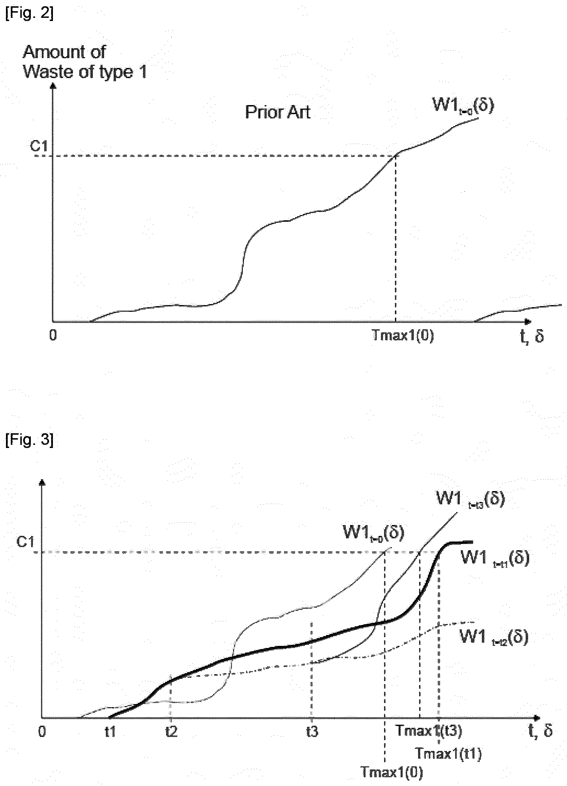

Figures 2 to 4 illustrate estimation of waste of type 1 in different embodiments. The same graphs can be made for all types of waste.

[Fig.2] illustrates an optional pre-estimation of the amount of waste of type 1 that can be calculated if the situation enables data to be known in advance. For instance, if an event happens at a venue, at least some given individuals (staff, guests, etc.) can be expected to be present. Based on this known information an amount of waste produced as a function of time can be estimated. As noted above, each individual is associated (by default, or through public statistics, or through experience by the knowledge of the system) with a law of production of waste for each type of waste, which in its simplest form can be expressed as a rate (i.e., a number of kgs per unit of time).

For each type of waste, the system can therefore draw the expected trend as a function of time W1(δ), calculated at t=0, i.e., before the event at the venue starts. δ is used here as the time variable in the future, to distinguish it from "t", the time variable at which the calculation of W1 is made. Based on the known maximum capacity C1 of the waste container(s) for this type of waste, an estimated time when the collection must be done Tmax1(0) can be determined and the collecting entity can be informed accordingly. This part of the planned estimation is as such known from prior art as it corresponds to a planned situation. The prediction can even go further and predict a second curve (right-hand side of the graph) after the waste has been collected.

The present invention takes the unfolding event dynamically into account. [Fig.3] illustrates the determination of the time Tmax1 with a more accurate precision. For instance, a first curve W1(δ) can be calculated at a first moment in time t1. In this illustration, t1 corresponds to the first moment when waste has been produced but the prediction effectively can start earlier than this moment. Hence, at t=t1, the foreseeable time to collect the waste of type 1 is calculated as being Tmax1(t1) which may be different from the (optionally computed) Tmax1(0).

Sequentially, or continuously, during the event, the data processing means calculate, based on real-time presence of individuals and their associated parameters, successive curves W1. For instance, at t=t2, W1ₜ₌ₜ₂(δ) is calculated. This curve starts the computation based on the cumulative amount of waste estimated to have been produced until t2 and extrapolates based on the individual actually present at t=t2 and their associated parameters. This curve may lead to yet another time Tmax1(t2) (which in this case is not illustrated, as the course of events may unexpectedly lead to a time for collection that is considerably later than expected).

At t=t3, starting from the cumulative estimated amount of waste (of type 1) produced until t3, the data processing means calculate, based on real-time presence of individuals and their associated parameters, the curve W1ₜ₌ₜ₃(δ). A value of Tmax1(t3) is calculated.

This graph illustrates how successive recalculations based on the individuals being effectively present and their associated parameters/activities, can be made. Even though [Fig.3] illustrates times t1, t2 and t3, in practice, the computations can be made continuously, i.e., at a high frequency, or sequentially at a frequency that is asserted to be sufficient in view of the context: one computation per second is often not necessary, but a few computations per minute may be needed in some cases.

The collecting entity is informed of the calculation of Tmax but may not need to know if Tmax changes within a given range. This would save some communication energy and some useless recalculation of the itinerary of the trucks. However, when Tmax changes (between an early curve W1(δ) and a later curve W1(δ)) above a given threshold, the data processing means inform the collecting entity to recalculate the itinerary and to plan the collection.

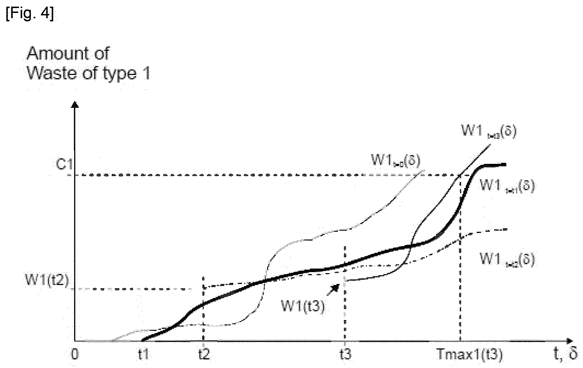

[Fig.4] illustrates an embodiment where auxiliary sensors are used to correct in real-time (or periodically when these sensors deliver information) the actual amount of waste measured in the containers. In comparison to [Fig.3], for illustration purposes, at t=t2, the curve W1ₜ₌ₜ₂(δ) does not start at the value of W1ₜ₌ₜ₁(t2) but starts at an actual value measured by the auxiliary sensors, W1(t2). Hence, the entire curve W1ₜ₌ₜ₂(δ) is closer to the actual amount of waste and this improves the prevision of Tmax.

Similarly, at t=t3, the curve W1ₜ₌ₜ₃(δ) is set to start at a measured value W1(t3).

If one compares figures 3 and 4, the final value Tmax1(t3) is slightly delayed, for illustration purposes, illustrating an improvement of the adequacy of the time calculated for the collection of waste of type 1.

As for [Fig.3], the times t1, t2 and t3 are only used for illustrating the concept of the invention, since computation can be made continuously or at a high enough frequency. In an embodiment, the frequency of measurement of the auxiliary sensors may trigger the update and the new calculation of the curves.

The difference between the estimation and the actually measured amount of waste can be attributed to various factors. The first factor is inherent to the method: since by essence the invention takes the unexpected surprising events under consideration, a difference between the estimated amount of waste and the actual waste may be attributed to a sudden change during the event (many individuals suddenly leaving the venue or coming in, producing waste or not, etc.).

A second factor that can impact the divergence between estimated and measured values can be a change of habits or an inadequate estimation, based on improper parameters allocated to the individuals. In such a case, the processing means updates the individuals' parameters based on the actual waste: if more waste has been produced of a particular type, the rates or the laws of production of waste are increased for the individual(s) who are alleged to have produced that waste.

A third factor which may cause the difference can be a hardware failure, i.e., an auxiliary sensor failing. This can be detected by a sensor failing to deliver a signal or delivering a signal that is substantially different from the estimated values. This factor can be easily eliminated by inspecting the sensors, or programming routine maintenance.

Whether one or more of these three factors is involved, the data obtained from the auxiliary sensors and the differences between the actual data and the estimated data can feed back information to improve the reliability of the model and hence any future computation.

## Claims

1. System (1) comprising:
a plurality of waste containers (10) disposed at venue locations (2), each waste container (10) being attributed a type of waste and each waste container (10) having a capacity;
a plurality of sensors (4) located at the venue locations (2), each sensor (4) being configured to detect the presence of individuals (8) at the respective venue location (2) and to collect parameters associated with the individuals (8), the parameters including at least an amount of waste (R1(t), R2(t), ..., RN(t)) of a given type expected to be produced by the individual (8); and
data processing means (20) programmed to:
compute, based on data received from the sensors (4), an expected filling level (W1) for each waste container (10) and/or for each waste container type and/or a time (Tmax1) when a respective waste container (10) will be filled to capacity (C1); and
transmit the computed filling levels (W1) and/or times (Tmax1) to a collecting entity (30).

2. System (1) according to claim 1, **characterized in that** the sensors (4) comprise wireless detectors configured to detect the presence of individuals (8) at the venue locations (2) and their associated parameters (R1(t), R2(t), ..., RN(t)) by detecting mobile computing devices (6) held or worn by the individuals (8).

3. System (1) according to claim 2, **characterized in that** the data processing means (20) or the wireless detectors (4) are configured to generate a discovery record upon detection of a mobile computing device (6), the discovery record comprising a unique identifier (Ind_ID) of said mobile computing device (6), a timing information and an amount of waste of any given type of waste associated to the mobile computing device (6).

4. System (1) according to any of claims 2 or 3, **characterized in that** the wireless detectors (4) are configured to request authorisation from the mobile computing device (6) to access private data stored thereon.

5. System (1) according to any of claims 2-4, **characterized in that** the wireless detectors (4) are configured to collect data from mobile computing devices (6) located in their vicinity and which run an application dedicated to share waste production private data.

6. System (1) according to any of the preceding claims, **characterized in that** the data processing means (20) are programmed to collect publicly available data from the Internet and to take publicly available data under consideration during the computation of an expected filling level (W1) for each waste container (10) and/or of a time (Tmax1) when a respective waste container (10) will be filled to capacity (C1).

7. System (1) according to any of the preceding claims, **characterized in that** the data processing means (20) are programmed to combine the detections of the presence of several individuals (8) to identify a situation amongst a pre-determined list of possible situations, and the data processing means (20) are programmed to take the situation under consideration when computing an expected filling level (W1) for each waste container and/or a time (Tmax1) when a respective waste container (10) will be filled to capacity (C1).

8. System (1) according to any of the preceding claims, **characterized in that** the sensors (4) comprise audio sensors, camera or video sensors, facial and/or textual recognition sensors, and the presence of individuals (8) and/or their associated parameters (R1(t), R2(t), ..., RN(t)) is established based on audio, image, video, facial and/or textual data.

9. System (1) according to any of the preceding claims, **characterized in that** the collecting entity (30) comprises a plurality of collecting vehicles (32) in communication with the data processing means (20), wherein the data processing means (20) are programmed to indicate to the vehicles (32) or to their drivers a location where waste has to be collected and/or to indicate an itinerary for operating the collection of waste, with the aim to ensure that waste is collected before any waste container (10) surpasses its capacity.

10. System (1) according to any of claims 1 to 8, **characterized in that** the system comprises the collecting entity (30), and the collecting entity (30) comprises a plurality of autonomous collecting vehicles (32) whose movements are controlled by the data processing means (20) with the aim to ensure that waste is collected before any waste container (10) surpasses its capacity.

11. System (1) according to any of the preceding claims, **characterized in that** auxiliary sensors (12) are provided in or near the waste containers (10), in the collecting vehicles (32) and/or at a dumpsite where the collecting vehicles (32) unload the waste, wherein the auxiliary sensors (12) measure an amount of waste (W1) of any given type and communicate data to the data processing means (20), and wherein upon a difference occurring between the computation of the data processing means (20) and the amount detected by the auxiliary sensors (12), the data processing means (20) are programmed to update the amount of waste (W1) of a given type expected to be produced by the respective individuals who were detected by the sensors (4) before the step of computing.

12. System (1) according to claim 11, **characterized in that** the data processing means (20) determine if an auxiliary sensor (12) fails to provide a coherent signal and the data processing means (20) informs the collecting entity (30) that such a failing auxiliary sensor (12) is to be replaced.

13. System (1) according to any of the preceding claims, **characterized in that** the data processing means (20) are configured to output information suggesting the addition of a waste container (10), together with its type of waste and its location, based on the computed expected filling level for each waste container (10) and/or the computed time when a respective waste container (10) will be filled to capacity (C1).

14. Method for operating the system (1) according to any of claims 1 to 13, the method comprising one or more of the following steps:
informing the data processing means (20) of the number of waste containers (10), the type of waste that they are targeted to contain, and their respective maximum capacity (C1), and optionally their location; and/or
feeding the data processing means (20) with scenarios and/or with profiles of expected individuals(8) and/or with publicly available data in relation to the venue or to the expected individuals; and/or detecting the presence of individuals (8) and their associated parameters (R1(t), R2(t), ..., RN(t)); and/or
continuously or sequentially computing a waste amount for each type of waste; and/or
continuously or sequentially informing the collecting entities (30) of the expected respective time (Tmax) when the waste containers will reach their full capacity; and/or
correcting or updating these expected respective times (Tmax); and/or correcting or updating the individuals parameters based on the actual measured amount of waste produced; and/or
training the data processing means (20) with feedback obtained from measured amount of waste.

15. Method for training data processing means (20) of a system (1), the system (1) comprising:
a plurality of waste containers (10) disposed at venue locations (2), each waste container (10) being attributed a type of waste and each waste container having a capacity (C1);
a plurality of sensors (4) located at the venue locations (2), each sensor (4) being configured to detect the presence of individuals (8) at the venue locations (2) and to collect parameters (R1(t), R2(t), ..., RN(t)) associated with the individuals (8), the parameters (R1(t), R2(t), ...,
RN(t)) including at least an amount of waste of a given type expected to be produced by the individual (8), the amount of waste being initially based on publicly available data; and
auxiliary sensors (12) provided in the waste containers (10), in collecting vehicles (32) and/or at a dumpsite where the collecting vehicles unload the waste, wherein the auxiliary sensors (12) measure an amount of waste contained in containers (10) or collected,
the processing means (20) being programmed to:
compute, based on data received from the sensors, an expected filling level (W1) for each waste container (10); gather the amount of contained/collected waste measured by the auxiliary sensors (12); and
update the individuals' parameters (R1(t), R2(t), ..., RN(t)) upon a difference occurring between the computed filling level and the contained/collected amount.

## Patentansprüche

1. System (1), umfassend: eine Mehrzahl von Abfallbehältern (10), die an Veranstaltungsorten (2) angeordnet sind, wobei jedem Abfallbehälter (10) eine Art von Abfall zugeordnet ist und wobei jeder Abfallbehälter (10) ein Fassungsvermögen aufweist;
eine Mehrzahl von Sensoren (4), die an den Veranstaltungsorten (2) angeordnet sind, wobei jeder Sensor (4) dazu eingerichtet ist, die Anwesenheit von Personen (8) an dem jeweiligen Veranstaltungsort (2) zu erfassen und Parameter zu sammeln, die mit den Personen (8) verbunden sind, wobei die Parameter zumindest eine Menge von Abfall (R1(t), R2(t), ... , RN(t)) eines bestimmten Typs umfassen, von der erwartet wird, dass sie von der Person (8) erzeugt wird; und
eine Datenverarbeitungseinrichtung (20), die derart programmiert ist, dass sie:
auf der Grundlage von von den Sensoren (4) empfangenen Daten einen erwarteten Füllstand (W1) für jeden Abfallbehälter (10) und/oder für jeden Abfallbehältertyp und/oder einen Zeitpunkt (Tmax1) berechnet, zu dem ein jeweiliger Abfallbehälter (10) bis zu seinem Fassungsvermögen (C1) gefüllt sein wird; und
die berechneten Füllstände (W1) und/oder Zeitpunkte (Tmax1) an eine Sammelstelle (30) übermittelt.

2. System (1) nach Anspruch 1, **dadurch gekennzeichnet, dass** die Sensoren (4) drahtlose Detektoren umfassen, die dazu eingerichtet sind, die Anwesenheit von Personen (8) an den Veranstaltungsorten (2) und deren zugehörige Parameter (R1(t), R2(t), ... , RN(t)) durch Erfassen von mobilen Rechengeräten (6), die von den Personen (8 gehalten oder getragen werden, zu detektieren.

3. System (1) nach Anspruch 2, **dadurch gekennzeichnet, dass** die Datenverarbeitungseinrichtung (20) oder die drahtlosen Detektoren (4) dazu eingerichtet sind, bei der Erfassung eines mobilen Rechengeräts (6) einen Erfassungsdatensatz zu erzeugen, wobei der Erfassungsdatensatz einen eindeutigen Identifikator (Ind_ID) des mobilen Rechengeräts (6), eine Zeitinformation und eine mit dem mobilen Rechengerät (6) verknüpfte Abfallmenge eines beliebigen Abfalltyps umfasst.

4. System (1) nach einem der Ansprüche 2 oder 3, **dadurch gekennzeichnet, dass** die drahtlosen Detektoren (4) dazu eingerichtet sind, von dem mobilen Rechengerät (6) eine Autorisierung zum Zugriff auf darauf gespeicherte private Daten anzufordern.

5. System (1) nach einem der Ansprüche 2 bis 4, **dadurch gekennzeichnet, dass** die drahtlosen Detektoren (4) dazu eingerichtet sind, Daten von mobilen Rechengeräten (6) zu sammeln, die sich in ihrer Umgebung befinden und auf denen eine Anwendung ausgeführt wird, die zum Teilen privater Daten zur Abfallerzeugung vorgesehen ist.

6. System (1) nach einem der vorangehenden Ansprüche, **dadurch gekennzeichnet, dass** die Datenverarbeitungseinrichtung (20) derart programmiert ist, dass sie öffentlich verfügbare Daten aus dem Internet sammelt und die öffentlich verfügbaren Daten bei der Berechnung eines erwarteten Füllstands (W1) für jeden Abfallbehälter (10) und/oder eines Zeitpunktes (Tmax1), zu dem ein jeweiliger Abfallbehälter (10) bis zu seinem Fassungsvermögen (C1) gefüllt sein wird, berücksichtigt.

7. System (1) nach einem der vorangehenden Ansprüche, **dadurch gekennzeichnet, dass** die Datenverarbeitungseinrichtung (20) derart programmiert ist, dass sie die Detektionen der Anwesenheit mehrerer Personen (8) kombiniert, um eine Situation aus einer vorbestimmten Liste möglicher Situationen zu identifizieren, und dass die Datenverarbeitungseinrichtung (20) derart programmiert ist, dass sie die Situation bei der Berechnung eines erwarteten Füllstands (W1) für jeden Abfallbehälter (10) und/oder eines Zeitpunktes (Tmax1), zu dem ein jeweiliger Abfallbehälter (10) bis zu seinem Fassungsvermögen (C1) gefüllt sein wird, berücksichtigt.

8. System (1) nach einem der vorangehenden Ansprüche, **dadurch gekennzeichnet, dass** die Sensoren (4) Audiosensoren, Kamera- oder Videosensoren, Gesichtsund/oder Texterkennungssensoren umfassen und dass die Anwesenheit von Personen (8) und/oder deren zugehörige Parameter (R1(t), R2(t), ... , RN(t)) auf der Grundlage von Audio-, Bild-, Video-, Gesichts- und/oder Textdaten festgestellt wird.

9. System (1) nach einem der vorangehenden Ansprüche, **dadurch gekennzeichnet, dass** die Sammelstelle (30) eine Mehrzahl von Sammelfahrzeugen (32) umfasst, die mit der Datenverarbeitungseinrichtung (20) in Kommunikation stehen, wobei die Datenverarbeitungseinrichtung (20) derart programmiert ist, dass sie den Sammelfahrzeugen (32) oder deren Fahrern einen Ort anzeigt, an dem Abfall zu sammeln ist, und/oder eine Wegstrecke zur Durchführung der Abfallsammlung anzeigt, mit dem Ziel, sicherzustellen, dass Abfall gesammelt wird, bevor ein Abfallbehälter (10) sein Fassungsvermögen überschreitet.

10. System (1) nach einem der Ansprüche 1 bis 8, **dadurch gekennzeichnet, dass** das System die Sammelstelle (30) umfasst und dass die Sammelstelle (30) eine Mehrzahl von autonomen Sammelfahrzeugen (32) umfasst, deren Bewegungen durch die Datenverarbeitungseinrichtung (20) gesteuert werden, mit dem Ziel, sicherzustellen, dass Abfall gesammelt wird, bevor ein Abfallbehälter (10) sein Fassungsvermögen überschreitet.

11. System (1) nach einem der vorangehenden Ansprüche, **dadurch gekennzeichnet, dass** Hilfssensoren (12) in oder in der Nähe der Abfallbehälter (10), in den Sammelfahrzeugen (32) und/oder an einer Deponie vorgesehen sind, an der die Sammelfahrzeuge (32) den Abfall entladen, wobei die Hilfssensoren (12) eine Menge von Abfall (W1) eines beliebigen Abfalltyps messen und Daten an die Datenverarbeitungseinrichtung (20) übermitteln, und dass, wenn eine Abweichung zwischen der Berechnung der Datenverarbeitungseinrichtung (20) und der von den Hilfssensoren (12) erfassten Menge auftritt, die Datenverarbeitungseinrichtung (20) dazu programmiert ist, die Menge von Abfall (W1) eines bestimmten Typs zu aktualisieren, von der erwartet wird, dass sie von den jeweiligen Personen erzeugt wird, die vor dem Berechnungsschritt von den Sensoren (4) erfasst wurden.

12. System (1) nach Anspruch 11, **dadurch gekennzeichnet, dass** die Datenverarbeitungseinrichtung (20) dazu eingerichtet ist, festzustellen, ob ein Hilfssensor (12) kein kohärentes Signal liefert, und dass die Datenverarbeitungseinrichtung (20) die Sammelstelle (30) darüber informiert, dass ein derart fehlerhaft arbeitender Hilfssensor (12) zu ersetzen ist.

13. System (1) nach einem der vorangehenden Ansprüche, **dadurch gekennzeichnet, dass** die Datenverarbeitungseinrichtung (20) dazu eingerichtet ist, Informationen auszugeben, die eine Ergänzung um einen Abfallbehälter (10) vorschlagen, zusammen mit dessen Abfalltyp und dessen Standort, basierend auf dem berechneten erwarteten Füllstand für jeden Abfallbehälter (10) und/oder dem berechneten Zeitpunkt, zu dem ein jeweiliger Abfallbehälter (10) bis zu seinem Fassungsvermögen (C1) gefüllt sein wird.

14. Verfahren zum Betreiben des Systems (1) nach einem der Ansprüche 1 bis 13, umfassend ein oder mehrere der folgenden Schritte:
die Datenverarbeitungseinrichtung (20) über die Anzahl von Abfallbehältern (10), die Arten von Abfall, die in ihnen gesammelt werden sollen, und deren jeweilige maximale Kapazität (C1) und optional deren Standort zu informieren; und/oder die Datenverarbeitungseinrichtung (20) mit Szenarien und/oder mit Profilen erwarteter Personen (8) und/oder mit öffentlich verfügbaren Daten in Bezug auf den Veranstaltungsort oder auf die erwarteten Personen zu speisen; und/oder die Anwesenheit von Personen (8) und deren zugehörige Parameter (R1(t), R2(t), ..., RN(t)) zu detektieren; und/oder
fortlaufend oder sequentiell eine Abfallmenge für jeden Abfalltyp zu berechnen; und/oder
fortlaufend oder sequentiell die Sammelstellen (30) über die jeweiligen erwarteten Zeitpunkte (Tmax) zu informieren, zu denen die Abfallbehälter ihre volle Kapazität erreichen werden; und/oder
diese jeweiligen erwarteten Zeitpunkte (Tmax) zu korrigieren oder zu aktualisieren; und/oder
die Parameter der Personen auf der Grundlage der tatsächlich gemessenen produzierten Abfallmenge zu korrigieren oder zu aktualisieren; und/oder die Datenverarbeitungseinrichtung (20) mit Rückmeldungen aus den gemessenen Abfallmengen zu trainieren.

15. Verfahren zum Trainieren einer Datenverarbeitungseinrichtung (20) eines Systems (1), wobei das System (1) Folgendes umfasst:
eine Mehrzahl von Abfallbehältern (10), die an Veranstaltungsorten (2) angeordnet sind, wobei jedem Abfallbehälter (10) eine Art von Abfall zugeordnet ist und wobei jeder Abfallbehälter (10) ein Fassungsvermögen (C1) aufweist;
eine Mehrzahl von Sensoren (4), die an den Veranstaltungsorten (2) angeordnet sind, wobei jeder Sensor (4) dazu eingerichtet ist, die Anwesenheit von Personen (8) an den Veranstaltungsorten (2) zu erfassen und Parameter (R1(t), R2(t), ... , RN(t)) zu sammeln, die mit den Personen (8) verbunden sind, wobei die Parameter (R1(t), R2(t), ... , RN(t)) zumindest eine Menge von Abfall eines bestimmten Typs umfassen, von der erwartet wird, dass sie von der Person (8) erzeugt wird, wobei die Abfallmenge zunächst auf öffentlich verfügbaren Daten basiert; und
Hilfssensoren (12), die in den Abfallbehältern (10), in Sammelfahrzeugen (32) und/oder an einer Deponie vorgesehen sind, an der die Sammelfahrzeuge (32) den Abfall entladen, wobei die Hilfssensoren (12) eine Menge von in den Abfallbehältern (10) enthaltenem oder gesammeltem Abfall messen, wobei die Datenverarbeitungseinrichtung (20) derart programmiert ist, dass sie:
auf der Grundlage von von den Sensoren (4) empfangenen Daten einen erwarteten Füllstand (W1) für jeden Abfallbehälter (10) berechnet;
die von den Hilfssensoren (12) gemessene Menge des enthaltenen/gesammelten Abfalls sammelt; und
die Parameter (R1(t), R2(t), ... , RN(t)) der Personen (8) aktualisiert, wenn eine Abweichung zwischen dem berechneten Füllstand und der enthaltenen/gesammelten Menge auftritt.

## Revendications

1. Système (1) comprenant : une pluralité de conteneurs de déchets (10) disposés dans des lieux d'accueil (2), chaque conteneur de déchets (10) étant associé à un type de déchet et chaque conteneur de déchets (10) ayant une capacité ;
une pluralité de capteurs (4) situés dans les lieux d'accueil (2), chaque capteur (4) étant configuré pour détecter la présence d'individus (8) dans le lieu d'accueil (2) correspondant et pour collecter des paramètres associés aux individus (8), les paramètres comprenant au moins une quantité de déchets (R1(t), R2(t), ..., RN(t)) d'un type donné devant être produite par l'individu (8) ; et
des moyens de traitement de données (20) programmés pour : calculer, sur la base de données reçues des capteurs (4), un niveau de remplissage prévu (W1) pour chaque conteneur de déchets (10) et/ou pour chaque type de conteneur de déchets et/ou un instant (Tmax1) auquel un conteneur de déchets (10) correspondant sera rempli jusqu'à sa capacité (C1) ; et transmettre les niveaux de remplissage prévus (W1) et/ou les instants (Tmax1) calculés à une entité de collecte (30).

2. Système (1) selon la revendication 1, **caractérisé en ce que** les capteurs (4) comprennent des détecteurs sans fil configurés pour détecter la présence d'individus (8) dans les lieux d'accueil (2) et leurs paramètres associés (R1(t), R2(t), ..., RN(t)) en détectant des dispositifs informatiques mobiles (6) tenus ou portés par les individus (8).

3. Système (1) selon la revendication 2, **caractérisé en ce que** les moyens de traitement de données (20) ou les détecteurs sans fil (4) sont configurés pour générer un enregistrement de découverte lors de la détection d'un dispositif informatique mobile (6), l'enregistrement de découverte comprenant un identifiant unique (Ind_ID) dudit dispositif informatique mobile (6), une information de chronométrage et une quantité de déchets de tout type de déchet donné associée au dispositif informatique mobile (6).

4. Système (1) selon l'une quelconque des revendications 2 ou 3, **caractérisé en ce que** les détecteurs sans fil (4) sont configurés pour demander une autorisation au dispositif informatique mobile (6) afin d'accéder à des données privées stockées sur celui-ci.

5. Système (1) selon l'une quelconque des revendications 2 à 4, **caractérisé en ce que** les détecteurs sans fil (4) sont configurés pour collecter des données à partir de dispositifs informatiques mobiles (6) situés à proximité et exécutant une application dédiée au partage de données privées relatives à la production de déchets.

6. Système (1) selon l'une quelconque des revendications précédentes, **caractérisé en ce que** les moyens de traitement de données (20) sont programmés pour collecter des données publiques disponibles à partir d'Internet et pour prendre les données publiques disponibles en considération lors du calcul d'un niveau de remplissage prévu (W1) pour chaque conteneur de déchets (10) et/ou d'un instant (Tmax1) auquel un conteneur de déchets (10) correspondant sera rempli jusqu'à sa capacité (C1).

7. Système (1) selon l'une quelconque des revendications précédentes, **caractérisé en ce que** les moyens de traitement de données (20) sont programmés pour combiner les détections de la présence de plusieurs individus (8) afin d'identifier une situation parmi une liste prédéterminée de situations possibles, et les moyens de traitement de données (20) sont programmés pour prendre la situation en considération lors du calcul d'un niveau de remplissage prévu (W1) pour chaque conteneur de déchets (10) et/ou d'un instant (Tmax1) auquel un conteneur de déchets (10) correspondant sera rempli jusqu'à sa capacité (C1).

8. Système (1) selon l'une quelconque des revendications précédentes, **caractérisé en ce que** les capteurs (4) comprennent des capteurs audio, des capteurs de caméra ou vidéo, des capteurs de reconnaissance faciale et/ou textuelle, et **en ce que** la présence des individus (8) et/ou leurs paramètres associés (R1(t), R2(t), ..., RN(t)) est établie sur la base de données audio, d'image, vidéo, faciales et/ou textuelles.

9. Système (1) selon l'une quelconque des revendications précédentes, **caractérisé en ce que** l'entité de collecte (30) comprend une pluralité de véhicules de collecte (32) en communication avec les moyens de traitement de données (20), les moyens de traitement de données (20) étant programmés pour indiquer aux véhicules (32) ou à leurs conducteurs un lieu où des déchets doivent être collectés et/ou pour indiquer un itinéraire pour réaliser la collecte des déchets, afin de s'assurer que les déchets sont collectés avant qu'un quelconque conteneur de déchets (10) ne dépasse sa capacité.

10. Système (1) selon l'une quelconque des revendications 1 à 8, **caractérisé en ce que** le système comprend l'entité de collecte (30), et **en ce que** l'entité de collecte (30) comprend une pluralité de véhicules de collecte autonomes (32) dont les mouvements sont contrôlés par les moyens de traitement de données (20) afin de s'assurer que les déchets sont collectés avant qu'un quelconque conteneur de déchets (10) ne dépasse sa capacité.

11. Système (1) selon l'une quelconque des revendications précédentes, **caractérisé en ce que** des capteurs auxiliaires (12) sont prévus dans ou à proximité des conteneurs de déchets (10), dans les véhicules de collecte (32) et/ou sur un site de décharge où les véhicules de collecte (32) déchargent les déchets, les capteurs auxiliaires (12) mesurent une quantité de déchets (W1) de tout type de déchet donné et communiquent des données aux moyens de traitement de données (20), et **en ce qu'**en cas d'apparition d'une différence entre le calcul des moyens de traitement de données (20) et la quantité détectée par les capteurs auxiliaires (12), les moyens de traitement de données (20) sont programmés pour mettre à jour la quantité de déchets (W1) d'un type donné qui est prévue pour être produite par les individus respectifs qui ont été détectés par les capteurs (4) avant l'étape de calcul.

12. Système (1) selon la revendication 11, **caractérisé en ce que** les moyens de traitement de données (20) déterminent si un capteur auxiliaire (12) ne fournit pas un signal cohérent, et **en ce que** les moyens de traitement de données (20) informent l'entité de collecte (30) qu'un tel capteur auxiliaire défaillant (12) doit être remplacé.

13. Système (1) selon l'une quelconque des revendications précédentes, **caractérisé en ce que** les moyens de traitement de données (20) sont configurés pour produire des informations suggérant l'ajout d'un conteneur de déchets (10), avec son type de déchet et son emplacement, sur la base du niveau de remplissage prévu calculé pour chaque conteneur de déchets (10) et/ou de l'instant calculé auquel un conteneur de déchets (10) correspondant sera rempli jusqu'à sa capacité (C1).

14. Procédé de fonctionnement du système (1) selon l'une quelconque des revendications 1 à 13, le procédé comprenant une ou plusieurs des étapes suivantes:
informer les moyens de traitement de données (20) du nombre de conteneurs de déchets (10), du type de déchet qu'ils sont destinés à contenir, et de leur capacité maximale (C1) respective, et éventuellement de leur emplacement ; et/ou alimenter les moyens de traitement de données (20) avec des scénarios et/ou avec des profils d'individus (8) attendus et/ou avec des données publiques disponibles en relation avec le lieu d'accueil ou avec les individus attendus ; et/ou détecter la présence d'individus (8) et leurs paramètres associés (R1(t), R2(t), ..., RN(t)) ; et/ou
calculer de manière continue ou séquentielle une quantité de déchets pour chaque type de déchet ; et/ou
informer de manière continue ou séquentielle les entités de collecte (30) de l'instant respectif prévu (Tmax) auquel les conteneurs de déchets atteindront leur pleine capacité ; et/ou
corriger ou mettre à jour ces instants respectifs prévus (Tmax) ; et/ou corriger ou mettre à jour les paramètres des individus sur la base de la quantité réelle de déchets produite mesurée ; et/ou
entraîner les moyens de traitement de données (20) avec une rétroaction obtenue à partir de la quantité mesurée de déchets.

15. Procédé d'entraînement de moyens de traitement de données (20) d'un système (1), le système (1) comprenant :
une pluralité de conteneurs de déchets (10) disposés dans des lieux d'accueil (2), chaque conteneur de déchets (10) étant associé à un type de déchet et chaque conteneur de déchets ayant une capacité (C1) ;
une pluralité de capteurs (4) situés dans les lieux d'accueil (2), chaque capteur (4) étant configuré pour détecter la présence d'individus (8) dans les lieux d'accueil (2) et pour collecter des paramètres (R1(t), R2(t), ..., RN(t)) associés aux individus (8), les paramètres (R1(t), R2(t), ..., RN(t)) comprenant au moins une quantité de déchets d'un type donné devant être produite par l'individu (8), la quantité de déchets étant initialement basée sur des données publiques disponibles ; et
des capteurs auxiliaires (12) prévus dans les conteneurs de déchets (10), dans les véhicules de collecte (32) et/ou sur un site de décharge où les véhicules de collecte déchargent les déchets, les capteurs auxiliaires (12) mesurant une quantité de déchets contenue dans les conteneurs (10) ou collectée,
les moyens de traitement de données (20) étant programmés pour :
calculer, sur la base de données reçues des capteurs (4), un niveau de remplissage prévu (W1) pour chaque conteneur de déchets (10) ;
rassembler la quantité de déchets contenue/collectée mesurée par les capteurs auxiliaires (12) ; et
mettre à jour les paramètres des individus (R1(t), R2(t), ..., RN(t)) en cas d'apparition d'une différence entre le niveau de remplissage prévu calculé et la quantité contenue/collectée.
